# EUROPEAN PATENT SPECIFICATION

(11) **EP 3 660 672 B1**
(45) Date of publication and mention of the grant of the patent: **19.01.2022**
(21) Application number: 18846941.5
(22) Date of filing: 24.04.2018
(51) Int. Cl.: G06F 9/4401

(54) **METHOD AND DEVICE FOR WAKING UP COMPUTER FROM SLEEP STATE**
VERFAHREN UND VORRICHTUNG ZUM AUFWECKEN EINES COMPUTERS AUS DEM RUHEZUSTAND
PROCÉDÉ ET DISPOSITIF POUR RÉVEILLER UN ORDINATEUR À PARTIR D'UN ÉTAT DE SOMMEIL

(30) Priority: 18.08.2017 CN 201710712286
(43) Date of publication of application: 03.06.2020
(73) Proprietor: Huawei Technologies Co., Ltd., Longgang District Shenzhen, Guangdong 518129 (CN)
(72) Inventor: LAI, Chih-yung, Shenzhen Guangdong 518129 (CN); LI, Yi, Shenzhen Guangdong 518129 (CN); LI, Fengjun, Shenzhen Guangdong 518129 (CN)
(74) Representative: Gill Jennings & Every LLP
(86) International application number: PCT/CN2018/084184
(87) International publication number: WO 2019/033779

(56) References cited:
- CN-A- 101 539 803
- CN-A- 105 912 287
- CN-A- 106 227 323
- US-A1- 2012 327 062

## Description

### TECHNICAL FIELD

This application relates to the field of information technologies, and in particular, to a method and an apparatus for waking up a computer from a sleep state.

### BACKGROUND

A new working interface between computer hardware and each of a computer operating system and a BIOS (basic input output system, basic input/output system) is defined in the ACPI (advanced configuration and power management interface, advanced configuration and power management interface). In the ACPI, six power management modes S0 to S5 of a computer are defined, where S3 is used to implement low power consumption standby of the computer. A sleep (Sleep) state in a Windows operating system and a suspend to RAM (suspend to RAM) state in a BIOS both refer to an S3 mode defined in the ACPI. In a state corresponding to the S3 mode, a memory (RAM) is still powered by a power supply and is in a self-refresh state, and all information stored in the memory, such as an operating system, an application program, and an opened file, is not lost. The following briefly describes a process in which a computer switches from the S3 mode to an awake mode.

When the computer detects an operation of pressing a power button by a user, a CPU (central processing unit, central processing unit) of the computer first executes an instruction of an SEC (security, security) stage started by a BIOS, where the SEC stage means that: The CPU applies for a cache (cache) and loads preset SEC code into the cache to speed up execution of the SEC code. Then the CPU enters a PEI (pre-efi initialization, preset extensible firmware interface initialization) stage started by the BIOS. In the PEI stage, a main task of the CPU is to initialize related hardware in the computer, for example, the CPU and a memory. After the PEI stage ends, the CPU starts an operating system, initializes a graphics card, and loads a display adapter driver in the operating system. In this case, the computer can display a picture.

It can be learned from the foregoing description that, in the process in which the computer switches from the S3 mode to the awake mode, a display screen of the computer is always in a black screen state before the CPU starts the operating system. As a result, in the process of switching from the S3 mode to the awake mode, the display screen of the computer keeps in a black screen state for a relatively long time, and user experience is relatively poor.

US 2012/327062 relates to electronic apparatus, control method of electronic apparatus, and non-transitory computer-readable medium storing computer executable control program of electronic apparatus.

### SUMMARY

This application provides a method and an apparatus for waking up a computer from a sleep state, to resolve a problem in the prior art that a display screen keeps in a black screen state for a relatively long time in a process in which a computer switches from a sleep mode to an awake mode.

The invention has been defined in the independent claims. Further specific technical features have been defined in the dependent claims.

Based on certain principles disclosed in the present application, before controlling the computer to enter the sleep state, the CPU stores the picture information currently displayed on the display screen, and displays the picture information on the display screen in a process of controlling the computer to be woken up from the sleep state, so that before the computer starts the operating system, the display screen lights up, and a black screen state of the display screen in the process of waking up the computer from the sleep state is ended relatively early, to further reduce a waiting time of the user and improve user experience.

Based on certain principles disclosed in the present application, after the CPU starts to enter the PEI stage of the BIOS, the display screen lights up, so as to reduce a black screen time of the display screen and improve user experience.

Based on certain principles disclosed in the present application, before starting the operating system, the CPU may obtain the picture information and display the picture information, so that the display screen has lighted up before the operating system is started, so as to reduce the black screen time of the display screen and shorten a waiting time of the user.

Based on certain principles disclosed in the present application, it can be ensured that, each time before the computer enters the sleep state, the computer may apply for in advance a memory used for storing picture information displayed on the display screen, to improve processing efficiency of the entire processing process of switching from the sleep state to the awake state.

Based on certain principles disclosed in the present application, by obtaining, through the built-in WMI interface, the address information of the memory that is applied for in advance, the CPU can relatively quickly and conveniently obtain the address information before entering the sleep state, and store the picture information.

Based on certain principles disclosed in the present application, when storing picture information, the CPU sets a corresponding status bit in the memory that is applied for in advance, so that after obtaining the picture information subsequently, the CPU may directly determine, by recognizing the status bit, whether the picture information is stored, to improve processing efficiency of the entire processing process of switching from the sleep state to the awake state.

Based on certain principles disclosed in the present application, a status bit is set in the memory that is applied for in advance, so that the CPU can relatively conveniently and quickly determine, by recognizing the status bit, the storage status of the memory that is applied for in advance.

In the embodiments of the present invention, after detecting the first instruction used for instructing the computer to enter the sleep state, the CPU chooses to store, in the memory that is applied for in advance, the picture information currently displayed on the display screen of the computer, and controls the computer to enter the sleep state; after subsequently detecting the second instruction used for instructing the computer to switch from the sleep state to the awake state, the CPU obtains the picture information from the memory that is applied for in advance, and displays the picture information on the display screen; and the CPU starts the operating system, and controls the computer to switch from the sleep state to the awake state. According to the manner of the embodiments of the present invention, in a process in which the CPU controls the computer to be woken up, before starting the operating system, the CPU can enable the display screen to display picture information, so that the display screen can light up relatively early and display the picture information, to end a black screen state of the display screen in a process of waking up the computer from a sleep state, to reduce a waiting time of a user and improve user experience.

### DESCRIPTION OF DRAWINGS

FIG 1 is a schematic architectural diagram of a computer according to an embodiment of this application;
FIG 2 is a schematic diagram of a method for waking up a computer from a sleep state according to an embodiment of this application;
FIG 3 is a schematic structural diagram of hardware of a computer according to an embodiment of this application;
FIG. 4 is a flowchart of a method for waking up a computer from a sleep state according to an embodiment of this application;
FIG. 5 is a schematic structural diagram of a computer according to an embodiment of this application; and
FIG. 6 is a schematic structural diagram of a computer according to an embodiment of this application.

### DESCRIPTION OF EMBODIMENTS

To make the objectives, technical solutions, and advantages of this disclosure clearer, the following further describes the implementations of this disclosure in detail with reference to the accompanying drawings. The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

This application provides a method and an apparatus for waking up a computer from a sleep state, so that when a computer is woken up after entering a sleep state, a display screen can display a picture relatively early and end a black screen state during a wake-up process, thereby shortening a waiting time of a user and further improving user experience.

First, some terms in this application are described, to help persons skilled in the art have a better understanding.
(1) A sleep state, which is a state corresponding to a case in which a computer enters an S3 mode defined in the ACPI. A computer user may select a corresponding option in a power management menu to enter a sleep state, or may input a corresponding command to make the computer enter a sleep state. Each hardware component module of the computer in the sleep state is in a low power consumption state.
(2) "Being woken up from a sleep state" means a process of making the computer entering a sleep state restore to an operating state. The compute can operate normally only when being woken up from the sleep state. After the computer is woken up from the sleep state, a picture displayed on a display screen of the computer is a picture existing when the computer enters the sleep state last time.
(3) An external device, which is a device to which the computer is connected through a peripheral interface of the computer, including but not limited to: a display, a mouse, a keyboard, a touch panel, and the like.
(4) A Windows management instrumentation (windows management instrumentation, WMI) interface, which is configured to implement a function of calling data of a CPU. In the embodiments of the present invention, through configuration of a WMI interface, the CPU can obtain address information of a memory that is applied for in advance, and may set an input parameter and an output parameter of the WMI interface based on a specific scenario.
(5) A first status bit and a second status bit, where a status bit is used to indicate a storage status of a memory, and the status bit is at a specified bit in the memory; and it is determined, based on a value or an identifier stored at the specified bit, whether there is the status bit or whether the status bit is a specified value. In the embodiments of the present invention, if picture information is stored in the memory, the first status bit is set at the specified bit, or the second status bit is set to the specified value.
(6) Address information, which is used to indicate location information of a memory that is applied for in advance. The CPU may learn, through the address information, of a specific location of the memory that is applied for in advance, and store picture information in the memory. There are a plurality of methods for indicating the address information. The address information may be a start location and a length of the memory, or may be the start location and an end location of the memory. Any address information that may be used to indicate the location of the memory is applicable to the embodiments of the present invention.
(7) "A plurality of' means two or more than two.

In the embodiments of this application, the solution of waking up a computer from a sleep state may be applied to various apparatuses. The apparatuses include but are not limited to a personal computer, a server computer, a handheld or laptop device, a mobile device (such as a tablet computer and a personal digital assistant), a small-size computer, a mainframe computer, and like. Using a computer as an example, the following specifically describes the solutions provided in the embodiments of this application. The following first briefly describes a specific structural composition of the computer.

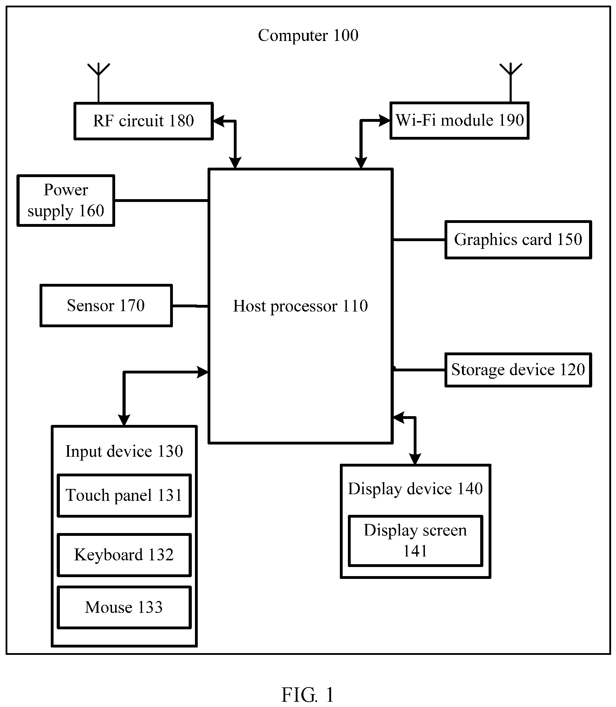

FIG. 1 is a schematic structural diagram of computer hardware of a handheld device (laptop) applied to an embodiment of this application. As shown in FIG. 1, the computer 100 includes a host processor 110 and a storage device 120. The storage device 120 may be configured to store a software program and data, and the host processor 110 runs the software program and the data stored in the storage device 120, to perform various functions of the computer 100 and data processing. The storage device 120 mainly includes a program storage area and a data storage area, where the program storage area may store an operating system, an application required by at least one function (such as a function of controlling the computer 100 to enter a sleep state), and the like, and the data storage area may store data (such as picture information displayed on a display screen) created based on a use process of the computer 100. In addition, the storage device 120 may be a high speed random access memory, or may be a non-volatile memory such as at least one magnetic disk storage device, a flash memory device, or other volatile solid-state storage devices.

The host processor 110 is a control center of the computer 100, is connected to each part of the whole computer 100 by using various interfaces and lines, and runs or executes the software program and/or the data stored in the storage device 120, to perform various functions of the computer 100 and data processing, so as to perform overall monitoring on the computer 100. The host processor 110 may include an arithmetic unit, a register, and a controller, and is configured to perform a related operation, so as to implement the technical solutions provided in the embodiments of this application.

The computer 100 further includes some external devices, such as an input device 130, configured to receive input digital information, character information, or a contact-type touch operation/a contactless gesture, generate signal input related to a user setting and function control of the computer 100, and the like.

Specifically, in this embodiment of this application, the input device 130 may include a touch panel 131. The touch panel 131, also referred to as a touchscreen, may collect a touch operation performed by a user on or near the touch panel 131 (for example, an operation performed by the user on or near the touch panel 131 by using any suitable object or accessory such as a finger or a stylus), and drive a corresponding connection apparatus according to a preset program. The input device 130 may also include a keyboard 132 and a mouse 133. A character, a digit, a punctuation mark, and the like may be entered into the computer 100 through the keyboard 132, or a command may be sent to the computer 100 through a function key on the keyboard 132. For example, a command may be entered by clicking a character key on the keyboard 132 to initiate, to the host processor 110 of the computer 100, a first instruction for instructing the computer 100 to enter a sleep state, or wake-up of the computer 100 in a sleep state is triggered by clicking any key on the keyboard 132. The mouse 133 may be used for locating a cursor on a current display screen, and operating, by using a key and a scroll wheel apparatus, a screen element in a location through which the cursor passes, and triggering the computer 100 to execute a corresponding command. For example, an option, displayed on the display screen, for entering a sleep state may be clicked by using the mouse 133 to initiate, to the host processor 110 in the computer 100, the first instruction for instructing the computer 100 to enter the sleep state.

The computer 100 may further include another input device, and the another input device may include but is not limited to one or more of a function key (such as a volume control key and an on/off key), a trackball, a light pen, a joystick, and the like.

The computer 100 may include a display device 140, and the display device 140 includes a display screen 141, configured to display information entered by the user or information provided for the user, various menu interfaces of the computer 100, and the like. In this embodiment of this application, the display screen 141 is mainly configured to display picture information of the computer 100 in a current processing status. Optionally, the display screen 141 may be configured in a form of a liquid crystal display (liquid crystal display, LCD), an OLED (organic light-emitting diode, organic light-emitting diode), or the like. In some other embodiments, the touch panel 131 may cover the display screen to form the touch display screen 141.

The computer 100 may further include a graphics card 150, and the graphics card 150 converts, to an analog signal, a digital signal input to the computer 100, and makes the display screen 141 display the converted-to analog signal. The graphics card 150 also has a picture processing capability, and a processed picture is displayed through the display screen 141.

In addition, the computer 100 may further include a power supply 160 for supplying power to another module. The computer 100 may further include one or more sensors 170, such as an image sensor, a luminance sensor, a light sensor, a GPS sensor, and an infrared sensor. The computer 100 may further include a radio frequency (radio frequency, RF) circuit 180, configured to perform network communication with a wireless network device; and may further include a Wi-Fi module 190, configured to perform Wi-Fi communication with another device to obtain a picture, data, or the like transmitted by the another device.

Based on the foregoing description, this application provides a method and an apparatus for waking up a computer from a sleep state, to resolve a problem in the prior art that a display screen keeps in a black screen state for a relatively long time in a process in which a computer switches from a sleep mode to an awake mode. The method and the apparatus are based on a same inventive concept. Because problem resolving principles of the method and the apparatus are similar. For implementation of the apparatus and the method, reference may be made to each other, and repeated content is not described.

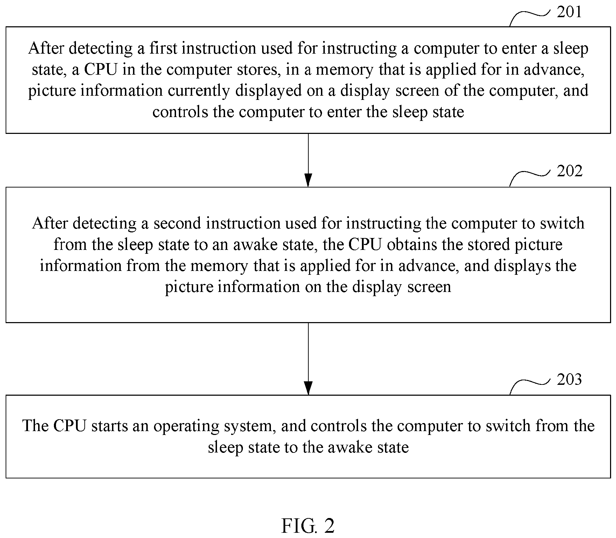

First, the method for waking up a computer from a sleep state provided in the embodiments of this application is described. The method is applicable to the foregoing computer 100 shown in FIG. 1. Therefore, in the embodiments of this application, only the computer 100 is used as an example for description. However, that the embodiments of the present invention are applied to another type of terminal device is not limited. Referring to FIG. 2, a specific process of the method includes the following steps:

Step 201: After detecting a first instruction used for instructing the computer 100 to enter a sleep state, a CPU in the computer 100 stores, in a memory that is applied for in advance, picture information currently displayed on a display screen of the computer 100, and controls the computer 100 to enter the sleep state.

The memory that is applied for in advance may be applied for by the CPU when the computer 100 is started. Each time when the computer 100 is started, the CPU applies for, in the computer 100, a block of memory for storing picture information displayed on the display screen. The memory that is applied for in advance should ensure that data stored in the memory is not lost after the computer 100 is woken up from the sleep state. For example, an attribute of the memory that is applied for in advance may be set to EfiACPIMemoryNVS. Certainly, alternatively, a memory area may be reserved in advance in a memory included in the computer 100.

In an implementation, the storing, by a CPU in a memory that is applied for in advance, picture information currently displayed on a display screen of the computer 100 may be implemented by performing snapshooting processing on the picture information currently displayed on the display screen, that is, snapshooting the currently displayed picture information; and then storing snapshot information in the memory that is applied for in advance.

Step 202: After subsequently detecting a second instruction used for instructing the computer 100 to switch from the sleep state to an awake state, the CPU obtains the obtained picture information from the memory that is applied for in advance, and displays the picture information on the display screen.

Specifically, after the CPU detects the second instruction used for instructing the computer 100 to switch from the sleep state to the awake state, the CPU starts a PEI stage of a BIOS, and after initializing a graphics card in the PEI stage, the CPU obtains the picture information from the memory that is applied for in advance.

Before starting an operating system, the CPU obtains the picture information, and displays the picture information on the display screen.

Step 203: The CPU starts an operating system, and controls the computer 100 to switch from the sleep state to the awake state.

The starting an operating system includes loading the external device driver of the computer, so that the CPU recognizes an operation performed by a user on the picture information displayed on the display screen.

During starting the operating system, the CPU loads the external device driver of the computer, so that an external device of the computer may run. For example, after a keyboard driver or a mouse driver is loaded, a user may enter a character by using a keyboard, or click, by using a mouse, a menu displayed in picture information, so that the CPU may recognize an operation performed by the user through the keyboard or the mouse on the picture information displayed on the display screen, and convert information about the operation to a control instruction to perform a corresponding operation.

In an implementation, in the foregoing step 201, a WMI interface may be configured in the computer 100. When the CPU needs to store the picture information currently displayed on the display screen, the CPU obtains, by calling the WMI interface, address information of the memory that is applied for in advance. The CPU may set a calling number for the WMI interface, and after inputting the calling number of the WMI interface, the CPU calls the WMI interface, and outputs, through the WMI interface, the address information of the memory that is applied for in advance.

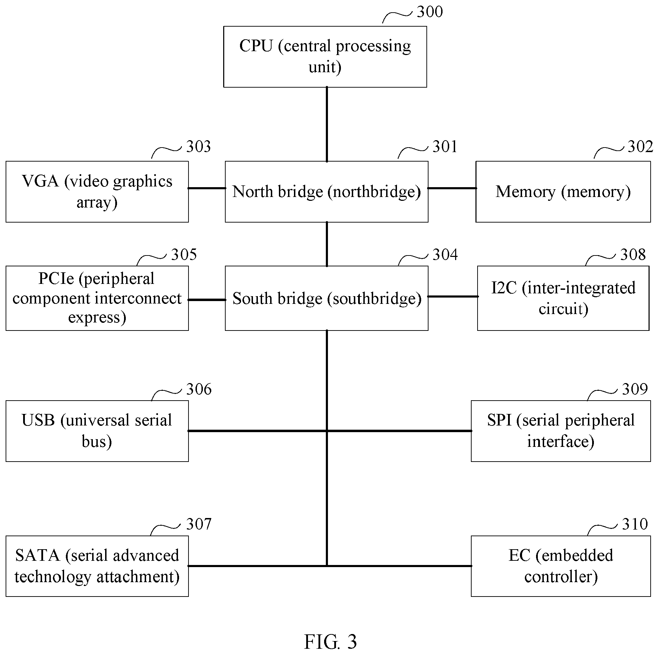

FIG. 3 is a structural composition diagram of main hardware modules of an X86 architecture computer. The computer includes a CPU 300, a north bridge (northbridge) 301, a memory (memory) 302, a VGA (video graphics array, video graphics array) 303, a south bridge (southbridge) 304, a PCIe (peripheral component interconnect express, peripheral component interconnect express) bus 305, a USB (universal serial bus, universal serial bus) 306, an SATA (serial ATA, serial advanced technology attachment) 307, an I2C (inter-integrated Circuit, inter-integrated circuit bus) 308, an SPI (serial peripheral interface, serial peripheral interface) 309, and an EC (embedded controller, embedded controller) 310. The north bridge 301 is connected to high speed devices such as the memory 302 and the VGA 303; the south bridge 304 is connected to low speed devices such as the PCIe bus 305, the USB 306, the SATA 307, the I2C 308, the SPI 309, and the EC 310; and the CPU 300 communicates with the north bridge 301 and the south bridge 304, to control each hardware module in the computer.

In the foregoing step 201, there are a plurality of manners of triggering the first instruction used for instructing the computer 100 to enter the sleep state. For example, after the user selects, through a keyboard or a mouse, an option for entering the sleep state, the computer 100 starts to perform a series of operations of entering the sleep state. The computer 100 first sends, in a broadcast mode, the first instruction used for instructing the computer 100 to enter the sleep state, so that each component module in the computer 100 can receive the first instruction, while after receiving the first instruction, each component module in the computer 100 performs a corresponding operation of entering the sleep state. For example, after receiving the first instruction, the CPU in the computer 100 controls the memory to store data information currently processed by the computer 100, and each hardware component module enters a low power consumption state. In this embodiment of the present invention, the CPU further stores, in the memory that is applied for in advance, the picture information currently displayed on the display screen of the computer 100.

In an implementation, after obtaining, by calling a pre-configured WMI interface, address information of the memory that is applied for in advance, the CPU may store, based on the address information of the memory that is applied for in advance and in the memory that is applied for in advance, the picture information currently displayed on the display screen of the computer 100.

There may be a plurality of manners for performing setting in the memory that is applied for in advance. Two manners thereof are described below:

In a first manner, a first status bit is set in the memory that is applied for in advance, and the first status bit is used to indicate that the picture information is stored in the memory that is applied for in advance.

In the memory that is applied for in advance, one or more bits may be set as the first status bit. When storing, in the memory that is applied for in advance, the picture information currently displayed on the display screen of the computer 100, the CPU sets the first status bit; and when the CPU does not store, in the memory that is applied for in advance, the picture information currently displayed on the display screen of the computer 100, the CPU does not set the first status bit.

There are a plurality of manners of indicating, through the first status bit, that the picture information is stored in the memory that is applied for in advance. For example, in the memory that is applied for in advance, one bit may be set as the first status bit, and when 0 is stored at the bit, it indicates that the picture information is stored in the memory. In the memory that is applied for in advance, two bits may alternatively be set as the first status bit, and when the two bits are 00, it indicates that the picture information is stored in the memory. A setting of the first status bit may be alternatively determined by using a specific identifier. For example, when the first status bit needs to be set in the memory, the specific identifier is set at one or more bits in the memory to indicate that the first status bit is stored in the memory.

A location of the first status bit may be a start location in the memory that is applied for in advance, may be an end location in the memory that is applied for in advance, or may be another location in the memory that is applied for in advance.

In a second manner, a second status bit is set in the memory that is applied for in advance, and the second status bit is used to indicate a storage status of the memory that is applied for in advance.

In the memory that is applied for in advance, one or more bits may be set as the second status bit. When storing, in the memory that is applied for in advance, the picture information currently displayed on the display screen of the computer 100, the CPU sets the second status bit to a specified value; and when the CPU does not store, in the memory that is applied for in advance, the picture information currently displayed on the display screen of the computer 100, the CPU sets the second status bit to another value.

There are a plurality of manners of indicating, through the second status bit, the storage status of the memory that is applied for in advance. For example, in the memory that is applied for in advance, one bit may be set as the second status bit; when 1 is stored at the bit, it indicates that the picture information is stored in the memory; and when 0 is stored at the bit, it indicates that the picture information is not stored in the memory. In the memory, two bits may be alternatively set as the second status bit; when the two bits are 11, it indicates that the picture information is stored in the memory; and when the two bits are 00, it indicates that the picture information is not stored in the memory. A location of the second status bit may be the start location in the memory that is applied for in advance, may be the end location in the memory that is applied for in advance, or may be another location in the memory that is applied for in advance.

In an implementation, in the foregoing step 202, after detecting the second instruction used for instructing the computer 100 to switch from the sleep state to the awake state, the CPU first enters an SEC stage started by the BIOS, applies for a cache, loads SEC code, and then enters the PEI stage started by the BIOS. In addition to hardware components such as the CPU and the memory, the CPU further needs to initialize the graphics card.

There are many manners of triggering the second instruction used for instructing the computer 100 to switch from the sleep state to the awake state. For example, after the user clicks a power button, or clicks a corresponding wake-up option through a mouse, the computer 100 first sends, in the broadcast mode, the second instruction used for instructing the computer 100 to switch from the sleep state to the awake state, so that each component module in the computer 100 can receive the second instruction, while after receiving the first instruction, each component module in the computer 100 performs a corresponding related operation of waking up the computer 100 from the sleep state. For example, after receiving the second instruction, the CPU in the computer 100 enters two stages of the BIOS. In this embodiment of the present invention, the CPU initializes the graphics card in the PEI stage of the BIOS, and obtains the picture information from the memory that is applied for in advance.

It should be noted that, in an existing PEI stage, an initialization operation is not performed on the graphics card, but the initialization operation is performed on the graphics card after the CPU starts the operating system. In this embodiment of the present invention, an operation of initializing the graphics card in the PEI stage is different from an operation of initializing the graphics card after the operating system is started. During initialization of the graphics card in the PEI stage, a GOP (graphic output protocol, graphic output protocol) driver in the BIOS is used for initializing the graphics card, while initialization of the graphics card after the operating system is started is implemented by using a VGA driver in the operating system.

The CPU may initialize the graphics card after starting the operating system, and restore picture information existing on the display screen before the sleep state is entered, so as to replace picture information displayed after the graphics card is initialized in the PEI stage of the BIOS. Because the picture information existing on the display screen before the sleep state is entered is the same as the picture information displayed after the graphics card is initialized in the PEI stage of the BIOS, switching may alternatively not be performed.

In the PEI stage, a time at which the CPU initializes the graphics card is not strictly required. The graphics card may be first initialized when the PEI stage is just entered, or initialization of the graphics card and another operation in the PEI stage may be performed at a same time.

After initialization of the graphics card is completed, the display screen can display a picture. In this case, the CPU obtains the stored picture information from the memory that is applied for in advance, transfers the picture information and stores the picture information in a memory of the graphics card, and displays the picture information on the display screen.

For the foregoing two different manners of performing setting in the memory that is applied for in advance, before obtaining the picture information from the memory that is applied for in advance, the CPU may further perform the following determining operations:

In a first manner, when the first status bit is set in the memory that is applied for in advance, if the CPU determines that the first status bit is stored in the memory that is applied for in advance, the CPU obtains the picture information from the memory that is applied for in advance; or if the CPU determines that the first status bit is not stored in the memory that is applied for in advance, the CPU determines that the CPU cannot obtain the picture information, and may directly perform an operation procedure of switching from the sleep state to the awake state.

For example, in the memory that is applied for in advance, a first bit at the start location is set as the first status bit; when 0 is stored at the bit, it indicates that the picture information is stored in the memory. When the CPU obtains the picture information from the memory that is applied for in advance, the CPU first determines whether the first bit for indicating the memory that is applied for in advance is 0; if the first bit is 0, the CPU determines that there is the first status bit in the memory that is applied for in advance, and determines that the picture information is stored in the memory that is applied for in advance, and the CPU may obtain the picture information from the memory that is applied for in advance; or if the first bit is not 0, the CPU determines that there is no first status bit in the memory that is applied for in advance, and determines that there is no picture information in the memory that is applied for in advance.

For another example, in the memory, the first status bit is set by using a specific identifier. When the CPU needs to obtain the picture information from the memory that is applied for in advance, the CPU may determine whether there is the specific identifier in the memory; if there is the specific identifier, the CPU determines that there is the first status bit in the memory that is applied for in advance, and that the picture information is stored in the memory that is applied for in advance, and the CPU may obtain the stored picture information; or otherwise, there is no picture information in the memory that is applied for in advance, and the CPU may perform the existing operation procedure of switching from the sleep state to the awake state.

In a second manner, when the second status bit is set in the memory that is applied for in advance, if the CPU determines that the second status bit is stored in the memory that is applied for in advance and that a value of the second status bit is a specified value, the CPU obtains the picture information from the memory that is applied for in advance; and if the CPU determines that the second status bit is stored in the memory that is applied for in advance and that the value of the second status bit is not the specified value but is another value, the CPU cannot obtain the picture information, so that the CPU performs the existing operation procedure of switching from the sleep state to the awake state.

For example, in the memory that is applied for in advance, a first bit at the start location is set as the second status bit; when 1 is stored at the bit, it indicates that the picture information is stored in the memory; and when 0 is stored at the bit, it indicates that the picture information is not stored in the memory. When the CPU obtains the picture information from the memory that is applied for in advance, the CPU first determines whether a bit of the second status bit is 1; if the bit of the second status bit is 1, the CPU determines that the second status bit stored in the memory that is applied for in advance is the specified value, the picture information is stored in the memory that is applied for in advance, and the CPU may obtain the picture information from the memory; and if the bit of the second status bit is not 1, the CPU determines that the second status bit stored in the memory that is applied for in advance is not the specified value, there is no picture information in the memory that is applied for in advance.

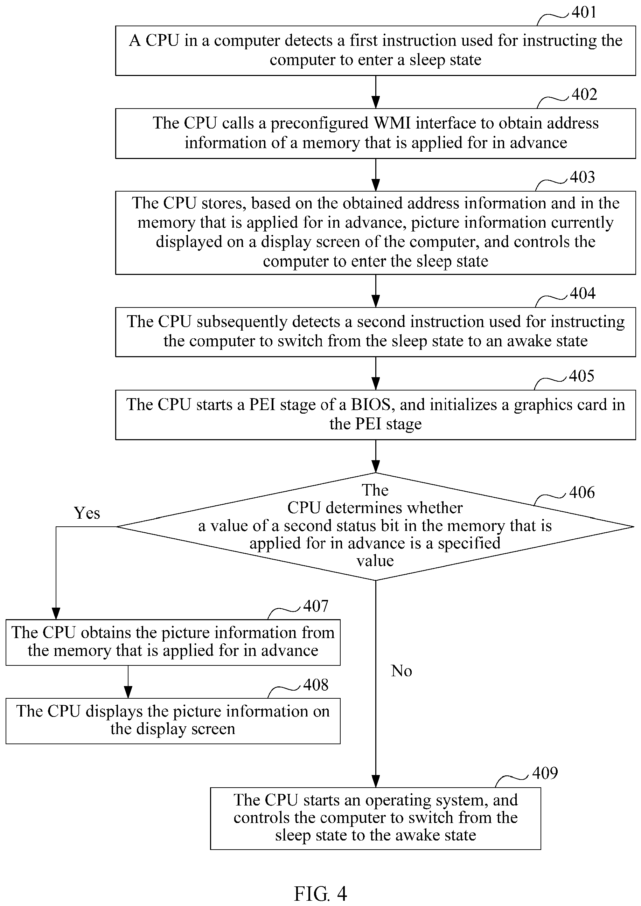

Based on the foregoing embodiment, as shown in FIG. 4, that a second status bit is set in a memory is used as an example. An embodiment of the present invention provides a method for waking up a computer from a sleep state, where the method includes the following steps:
Step 401: A CPU in the computer detects a first instruction used for instructing the computer to enter the sleep state.
Step 402: The CPU calls a pre-configured WMI interface to obtain address information of a memory that is applied for in advance.
Step 403: The CPU stores, based on the obtained address information and in the memory that is applied for in advance, picture information currently displayed on a display screen of the computer, and controls the computer to enter the sleep state.
Step 404: The CPU subsequently detects a second instruction used for instructing the computer to switch from the sleep state to an awake state.
Step 405: The CPU starts a PEI stage of a BIOS, and initializes a graphics card in the PEI stage.
Step 406: The CPU determines whether a value of a second status bit in the memory that is applied for in advance is a specified value; and if the value is the specified value, perform step 407; or otherwise, perform step 409.
Step 407: The CPU obtains the picture information from the memory that is applied for in advance.
Step 408: The CPU displays the picture information on the display screen.
Step 409: The CPU starts an operating system, and controls the computer to switch from the sleep state to the awake state.

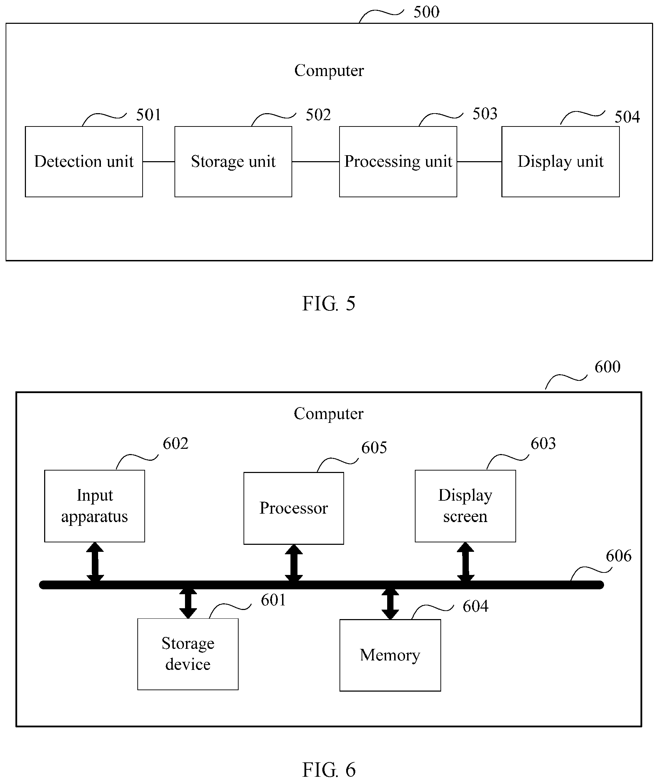

Based on the foregoing embodiments, an embodiment of this application further provides a computer. The computer is configured to implement the method, shown in FIG. 2, for waking up a computer from a sleep state. Referring to FIG. 5, the computer 500 includes a detection unit 501, a storage unit 502, a processing unit 503, and a display unit 504.

The detection unit 501 is configured to detect a first instruction used for instructing the computer to enter the sleep state and a second instruction used for instructing the computer to switch from the sleep state to an awake state. The storage unit 502 is configured to: after the detection unit 501 detects the first instruction, store, in a memory that is applied for in advance, picture information currently displayed on a display screen of the computer. The processing unit 503 is configured to: after the storage unit 502 stores the picture information in the memory, control the computer to enter the sleep state; after the detection unit 501 detects the second instruction, obtain the picture information from the memory that is applied for in advance; and start an operating system, and control the computer to switch from the sleep state to the awake state. The display unit 504 is configured to: after the processing unit 503 obtains the picture information from the memory that is applied for in advance, display, on the display screen, the picture information obtained by the processing unit 503.

The starting an operating system includes loading an external device driver of the computer 500, so that the processing unit 503 recognizes an operation performed by a user on the picture information displayed on the display screen.

When obtaining the picture information from the memory that is applied for in advance, the processing unit 503 is specifically configured to:
start a PEI stage of a BIOS, and after initializing a graphics card in the PEI stage, obtain the picture information from the memory that is applied for in advance.

The processing unit 503 obtains the picture information, and displays the picture information on the display screen before starting the operating system.

The memory that is applied for in advance may be but not limited to being applied for by the storage unit 502 when the computer is started, so that the storage unit 502 stores, in the memory before the computer enters the sleep state, the picture information displayed on the display screen of the display unit 504.

After the detection unit 501 detects the first instruction, the storage unit 502 needs to lean of address information of the memory that is applied for in advance, to store, based on the address information of the memory that is applied for in advance and in the foregoing memory that is applied for in advance, the picture information currently displayed on the display screen of the computer. In a possible implementation, the storage unit 502 may obtain, by calling a pre-configured WMI interface, the address information of the memory that is applied for in advance.

Further, after the storage unit 502 applies for the memory, a status bit may be set in the memory that is applied for in advance, to indicate a storage status of the memory. There may be the following two manners based on a specific scenario:

In a first manner, a first status bit is set in the memory that is applied for in advance, and when storing, in the memory that is applied for in advance, the picture information currently displayed on the display screen of the computer, the storage unit 502 sets the first status bit in the memory that is applied for in advance, where the first status bit is used to indicate that the picture information is stored in the memory.

In a second manner, a second status bit is stored in the memory that is applied for in advance; when storing, in the memory that is applied for in advance, the picture information currently displayed on the display screen of the computer, the storage unit 502 sets the second status bit to a specified value, where the specified value indicates that the picture information is stored in the memory; and when the storage unit 502 does not store, in the memory that is applied for in advance, the picture information currently displayed on the display screen of the computer, the storage unit 502 sets the second status bit to another value, where the another value indicates that the picture information is not stored in the memory.

Correspondingly, for the foregoing two setting manners, when obtaining the picture information from the memory, the processing unit 503 may use the following two manners:

In a first manner, after determining that the first status bit is stored in the memory that is applied for in advance, the processing unit 503 obtains the picture information from the memory; or if the processing unit 503 determines that the first status bit is not stored in the memory that is applied for in advance, the processing unit 503 does not obtain the picture information but performs the existing operation of waking up the computer from the sleep state.

In a second manner, when determining that the second status bit is stored in the memory that is applied for in advance and that a value of the second status bit is the specified value, the processing unit 503 obtains the picture information from the memory; and when determining that the second status bit is stored in the memory that is applied for in advance and that the value of the second status bit is another value, the processing unit 503 does not obtain the picture information but performs the existing operation of waking up the computer from the sleep state.

It should be noted that, in this embodiment of this application, unit division is an example, and is merely logical function division. In actual implementation, another division manner may be used. Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of this application. The foregoing storage medium includes: any medium that can store program code, such as a USB flash disk, a removable hard disk, a read-only memory (read-only memory, ROM), a random access memory (random access memory, RAM), a magnetic disk, or an optical disc.

Based on the foregoing embodiments, an embodiment of this application further provides a computer. The computer is configured to implement the method, shown in FIG. 2, for waking up a computer from a sleep state. Referring to FIG. 6, the computer 600 includes a storage device 601, an input apparatus 602, a display screen 603, a memory 604, and a processor 605.

The storage device 601 stores a software program and related data. Specifically, the software program may include program code, and the program code includes a computer operation instruction. The storage device 601 may include an RAM, or may further include a non-volatile memory (non-volatile memory), for example, at least one magnetic disk storage.

The processor 605 is configured to execute the software program stored in the storage device 601, to implement the method, shown in FIG. 2, for waking up a computer from a sleep state.

The input apparatus 602 is configured to receive a first instruction used for instructing the computer to enter a sleep state and a second instruction used for instructing the computer to switch from the sleep state to an awake state, and transmit the first instruction and the second instruction to the processor 605. Specifically, the input apparatus 602 may be a keyboard, a mouse, a touch panel, or the like. For example, when the input apparatus 602 is a touch panel, after recognizing that a user clicks an option for entering the sleep state by the computer, the touch panel determines that the touch panel receives the first instruction used for instructing the computer to enter the sleep state, and transmits the first instruction to the processor 605.

The display screen 603 is configured to display picture information of a task currently processed by the computer. Specifically, the display screen 603 may display picture information obtained by the processor 605 from the memory, so that the display screen 603 lights up in advance before the computer switches from the sleep state to the awake state.

The memory 604 is applied for in advance by the processor 605, and is configured to store newest picture information displayed on the display screen 603 before the sleep state is entered. Specifically, the memory 604 may be a removable hard disk, a read-only memory, a random access memory, or another storage medium.

The processor 605 is configured to call the software program stored in the storage device 601, to implement the method, shown in FIG. 2, for waking up a computer from a sleep state, and may specifically include the following operations:
after detecting the first instruction transmitted by the input apparatus 602 and used for instructing the computer to enter the sleep state, storing, in the memory 604, picture information currently displayed on the display screen 603, and controlling the computer to enter the sleep state; after detecting the second instruction transmitted by the input apparatus 602 and used for instructing the computer to switch from the sleep state to the awake state, obtaining the stored picture information from the memory 604, and displaying the picture information on the display screen 603; and then starting an operating system to control the computer to switch from the sleep state to the awake state, so that the computer is woken up from the sleep state, and enables, by initializing a graphics card, the display screen to display a picture as early as possible. In this case, a black screen state of the display screen in the process of waking up the computer from the sleep state, to reduce a waiting time of the user, facilitating improvement of user experience.

The starting an operating system includes loading an external device driver of the computer 600, so that the processor 605 recognizes an operation performed by the user on the picture information displayed on the display screen 603.

When obtaining the stored picture information from the memory 604, the processor 605 starts a PEI stage of a BIOS, and after initializing the graphics card in the PEI stage, obtains the picture information from the memory that is applied for in advance.

The processor 605 obtains the picture information, and displays the picture information on the display screen 603 before starting the operating system.

To ensure that before the computer enters the sleep state, a corresponding memory in the computer can store the picture information currently displayed on the display screen 603, the processor 605 may choose to preferentially apply for the memory 604 when the computer is started. In this way, after detecting the first instruction, the processor 605 needs to learn of address information of the memory 604, to store, based on the address information of the memory 604 and in the memory 604, the picture information currently displayed on the display screen 603 of the computer. In a possible implementation, the processor 605 may pre-configure a WMI interface, and obtain the address information of the memory 604 by calling the pre-configured WMI interface.

After applying for the memory 604, the processor 605 may set a status bit in the memory 604, to indicate a storage status of the memory 604. There may be the following two manners based on a specific scenario:

In a first manner, a first status bit is set in the memory 604. When storing, in the memory 604, the picture information currently displayed on the display screen 603 of the computer, the processor 605 sets the first status bit in the memory 604, where the first status bit is used to indicate that the picture information is stored in the memory 604.

In a second manner, a second status bit is set in the memory 604. When storing, in the memory 604, the picture information currently displayed on the display screen 603, the processor 605 sets the second status bit to a specified value, where the specified value indicates that the picture information is stored in the memory 604. When the processor 605 does not store, in the memory 604, the picture information currently displayed on the display screen 603, the processor 605 sets the second status bit to another value, where the another value indicates that the picture information is not stored in the memory 604.

For the foregoing two setting manners, when obtaining the picture information from the memory 604, the processor 605 may use the following two manners:

In a first manner, after determining that the first status bit is stored in the memory 604, the processor 605 obtains the picture information from the memory 604; or if the processor 605 determines that the first status bit is not stored in the memory 604 that is applied for in advance, the processor 605 does not obtain the picture information but performs the existing operation of waking up the computer from the sleep state.

In a second manner, when determining that the second status bit is stored in the memory 604 and that a value of the second status bit is the specified value, the processor 605 obtains the picture information from the memory 604; and when determining that the second status bit is stored in the memory 604 and that the value of the second status bit is another value, the processor 605 does not obtain the picture information but performs the existing operation of waking up the computer from the sleep state.

The processor 605, the storage device 601, the input apparatus 602, the display screen 603, and the memory 604 may be connected to each other through a bus 606 shown in FIG. 6. The bus 606 may be a peripheral component interconnect (peripheral component interconnect, PCI) bus, an extended industry standard architecture (extended industry standard architecture, EISA) bus, or the like. The bus 606 may be classified into an address bus, a data bus, a control bus, and the like. For ease of representation, only one thick line is used to represent the bus in FIG. 6, but this does not mean that there is only one bus or only one type of bus.

The embodiments of the present invention further provide a computer readable storage medium storing a computer program instruction and data that are required by a processor to perform the foregoing method. For example, the storage medium may be a storage medium similar to the foregoing storage device or the like.

In conclusion, according to the method and the apparatus for waking up a computer from a sleep state that are provided in the embodiments of the present invention, after detecting the first instruction used for instructing the computer to enter the sleep state, the CPU or the processor in the computer stores, in the memory that is applied for in advance, the picture information currently displayed on the display screen of the computer, and controls the computer to enter the sleep state; after subsequently detecting the second instruction used for instructing the computer to switch from the sleep state to the awake state, the CPU obtains the picture information from the memory that is applied for in advance, and displays the picture information on the display screen; and then the CPU or the processor starts the operating system, and controls the computer to switch from the sleep state to the awake state. According to the manner of the embodiments of the present invention, before controlling the computer to enter the sleep state, the CPU or the processor stores the picture information currently displayed on the display screen, and then in a process in which the CPU controls the computer to be woken up from the sleep state, the CPU initializes the graphics card in advance, so that the display screen can display a picture as early as possible, and a black screen state of the display screen in the process of waking up the computer from the sleep state is ended relatively early, to reduce a waiting time of a user, facilitating improvement of user experience.

The scope of protection shall be defined by the appended claims.

## Claims

1. A method for waking up a computer from a sleep state, wherein the method comprises:
after detecting a first instruction used for instructing the computer to enter the sleep state, storing (201), by a central processing unit, CPU, in the computer in a memory that is applied for in advance, picture information currently displayed on a display screen of the computer, and controlling the computer to enter the sleep state;
after detecting a second instruction used for instructing the computer to switch from the sleep state to an awake state, obtaining (202), by the CPU, the picture information from the memory that is applied for in advance, and displaying, using a graphic output protocol, GOP, the picture information on the display screen; and
starting (203), by the CPU, an operating system, and controlling the computer to switch from the sleep state to the awake state, wherein the starting an operating system comprises loading a device driver of an input apparatus of the computer, and recognizing, by the CPU, an operation performed by a user using the input apparatus on the picture information displayed on the display screen.

2. The method according to claim 1, wherein the obtaining, by the CPU, the picture information from the memory that is applied for in advance comprises:
starting, by the CPU, a pre-configured extensible firmware interface initialization PEI stage of a basic input/output system BIOS; and
after initializing a graphics card in the PEI stage, obtaining, by the CPU, the picture information from the memory that is applied for in advance.

3. The method according to claim 1 or 2, wherein the displaying, by the CPU, the picture information on the display screen is performed before the starting an operating system.

4. The method according to claim 1, wherein the memory that is applied for in advance is applied for by the CPU when the computer is started.

5. The method according to claim 1, wherein before the storing, by a CPU in a memory that is applied for in advance, picture information currently displayed on a display screen of the computer, the method further comprises:
obtaining address information of the memory that is applied for in advance; and
the storing, by a CPU in a memory that is applied for in advance, picture information currently displayed on a display screen of the computer comprises:
storing, by the CPU based on the address information of the memory that is applied for in advance and in the memory that is applied for in advance, the picture information currently displayed on the display screen of the computer.

6. The method according to claim 1, wherein the method further comprises:
when a second status bit is stored in the memory that is applied for in advance, and when storing, in the memory that is applied for in advance, the picture information currently displayed on the display screen of the computer, setting, by the CPU, the second status bit to a specified value, wherein the specified value indicates that the picture information is stored in the memory.

7. The method according to claim 6, wherein before the obtaining, by the CPU, the picture information from the memory that is applied for in advance, the method further comprises:
determining, by the CPU, that the second status bit is stored in the memory that is applied for in advance and a value of the second status bit is the specified value.

8. A computer (600), comprising a storage device (601), an input apparatus (602), a display screen (603), a memory (604), and a processor (605), wherein
the storage device stores a software program;
the input apparatus is configured to receive a first instruction used for instructing the computer to enter a sleep state and a second instruction used for instructing the computer to switch from the sleep state to an awake state, and transmit the first instruction and the second instruction to the processor;
the display screen is configured to display picture information of a task currently processed by the computer;
the memory is applied for in advance by the processor, and is configured to store the picture information displayed on the display screen;
the processor is configured to call a program stored in the storage device, and perform the following operations:
after detecting the first instruction transmitted by the input apparatus and used for instructing the computer to enter the sleep state, storing, in the memory, picture information currently displayed on the display screen, and controlling the computer to enter the sleep state;
after detecting the second instruction transmitted by the input apparatus and used for instructing the computer to switch from the sleep state to the awake state, obtaining the stored picture information from the memory, and displaying, using a graphic output protocol, GOP, the picture information on the display screen; and
starting an operating system to control the computer to switch from the sleep state to the awake state, wherein the starting an operating system comprises loading a device driver of the input apparatus of the computer, and recognizing, by the processor, an operation performed by a user using the input apparatus on the picture information displayed on the display screen.

9. The computer according to claim 8, wherein the processor is specifically configured to:
start a PEI stage of a BIOS, and
after initializing a graphics card in the PEI stage, obtain the picture information from the memory that is applied for in advance.

10. The computer according to claim 8 or 9, wherein the processor displays the picture information on the display screen before starting the operating system.

11. The computer according to claim 8, wherein the memory is applied for by the processor when the computer is started.

12. The computer according to claim 8, wherein the processor is further configured to:
obtain address information of the memory; and
when storing, in the memory, the picture information currently displayed on the display screen, the processor is specifically configured to:
store, in the memory based on the address information of the memory, the picture information currently displayed on the display screen.

13. The computer according to claim 8, wherein the processor is further configured to:
when a second status bit is stored in the memory, and when storing, in the memory, the picture information currently displayed on the display screen, set the second status bit to a specified value, wherein the specified value indicates that the picture information is stored in the memory.

14. The computer according to claim 13, wherein before obtaining the picture information from the memory, the processor is further configured to:
determine that the second status bit is stored in the memory and a value of the second status bit is the specified value.

15. A computer readable storage medium, wherein the computer readable storage medium stores a software program, and when being read and executed by one or more processors, the software program can implement the method according to any one of claims 1 to 7.

## Patentansprüche

1. Verfahren zum Aufwecken eines Computers aus einem Schlafzustand, wobei das Verfahren Folgendes umfasst:
nach Erfassen einer ersten Anweisung, die verwendet wird, um den Computer anzuweisen, in den Schlafzustand einzutreten, Speichern (201), durch eine zentrale Verarbeitungseinheit, CPU, in dem Computer in einem Speicher, der im Voraus beantragt wird, von Bildinformationen, die aktuell auf einem Anzeigebildschirm des Computers angezeigt werden, und Steuern des Computers, um in den Schlafzustand einzutreten;
nach Erfassen einer zweiten Anweisung, die verwendet wird, um den Computer anzuweisen, von dem Schlafzustand in einen Wachzustand zu wechseln, Erhalten (202), durch die CPU, der Bildinformationen von dem Speicher, der im Voraus beantragt wird, und Anzeigen, unter Verwendung eines grafischen Ausgabeprotokolls, GOP, der Bildinformationen auf dem Anzeigebildschirm; und
Starten (203), durch die CPU, eines Betriebssystems, und Steuern des Computers, um von dem Schlafzustand in den Wachzustand zu wechseln, wobei das Starten eines Betriebssystems das Laden eines Vorrichtungstreibers einer Eingabeeinrichtung des Computers und das Erkennen, durch die CPU, einer Operation, die durch einen Benutzer unter Verwendung der Eingabeeinrichtung an den Bildinformationen durchgeführt wird, die auf dem Anzeigebildschirm angezeigt werden, umfasst.

2. Verfahren nach Anspruch 1, wobei das Erhalten, durch die CPU, der Bildinformationen von dem Speicher, der im Voraus beantragt wird, Folgendes umfasst:
Starten, durch die CPU, einer vorkonfigurierten erweiterbaren Firmware-Schnittstellen-Initialisierungs-PEI-Stufe eines grundlegenden Eingabe/Ausgabe-System-BIOS; und
nach dem Initialisieren einer Grafikkarte in der PEI-Stufe, Erhalten, durch die CPU, der Bildinformationen von dem Speicher, der im Voraus beantragt wird.

3. Verfahren nach Anspruch 1 oder 2, wobei das Anzeigen, durch die CPU, der Bildinformationen auf dem Anzeigebildschirm vor dem Starten eines Betriebssystems durchgeführt wird.

4. Verfahren nach Anspruch 1, wobei der Speicher, der im Voraus beantragt wird, durch die CPU beantragt wird, wenn der Computer gestartet wird.

5. Verfahren nach Anspruch 1, wobei vor dem Speichern, durch eine CPU in einem Speicher, der im Voraus beantragt wird, von Bildinformationen, die aktuell auf einem Anzeigebildschirm des Computers angezeigt werden, das Verfahren ferner Folgendes umfasst:
Erhalten von Adressinformationen des Speichers, der im Voraus beantragt wird; und
das Speichern, durch eine CPU in einem Speicher, der im Voraus beantragt wird, von Bildinformationen, die aktuell auf einem Anzeigebildschirm des Computers angezeigt werden, Folgendes umfasst:
Speichern, durch die CPU basierend auf den Adressinformationen des Speichers, der im Voraus beantragt wird und in dem Speicher, der im Voraus beantragt wird, der Bildinformationen, die aktuell auf dem Anzeigebildschirm des Computers angezeigt werden.

6. Verfahren nach Anspruch 1, wobei das Verfahren ferner Folgendes umfasst:
wenn ein zweites Statusbit in dem Speicher gespeichert wird, der im Voraus beantragt wird, und wenn in dem Speicher, der im Voraus beantragt wird, die Bildinformationen gespeichert werden, die aktuell auf dem Anzeigebildschirm des Computers angezeigt werden, Einstellen, durch die CPU, des zweiten Statusbits auf einen spezifizierten Wert, wobei der spezifizierte Wert angibt, dass die Bildinformationen in dem Speicher gespeichert werden.

7. Verfahren nach Anspruch 6, wobei vor dem Erhalten, durch die CPU, der Bildinformationen von dem Speicher, der im Voraus beantragt wird, das Verfahren ferner Folgendes umfasst:
Bestimmen, durch die CPU, dass das zweite Statusbit in dem Speicher gespeichert wird, der im Voraus beantragt wird, und ein Wert des zweiten Statusbits der spezifizierte Wert ist.

8. Computer (600), umfassend eine Speichervorrichtung (601), eine Eingabeeinrichtung (602), einen Anzeigebildschirm (603), einen Speicher (604) und einen Prozessor (605), wobei
die Speichervorrichtung ein Softwareprogramm speichert;
die Eingabeeinrichtung konfiguriert ist, um eine erste Anweisung zu empfangen, die verwendet wird, um den Computer anzuweisen, in einen Schlafzustand einzutreten, und eine zweite Anweisung, die verwendet wird, um den Computer anzuweisen, von dem Schlafzustand in einen Wachzustand zu wechseln, und die erste Anweisung und die zweite Anweisung an den Prozessor zu übertragen;
der Anzeigebildschirm konfiguriert ist, um Bildinformationen einer Aufgabe anzuzeigen, die aktuell durch den Computer verarbeitet wird;
der Speicher im Voraus durch den Prozessor beantragt wird und konfiguriert ist, um die Bildinformationen zu speichern, die auf dem Anzeigebildschirm angezeigt werden;
der Prozessor konfiguriert ist, um ein Programm aufzurufen, das in der Speichervorrichtung gespeichert wird, und die folgenden Operationen durchzuführen:
nach Erfassen der ersten Anweisung, die durch die Eingabeeinrichtung übertragen und verwendet wird, um den Computer anzuweisen, in den Schlafzustand einzutreten, Speichern, in dem Speicher, von Bildinformationen, die aktuell auf dem Anzeigebildschirm angezeigt werden, und Steuern des Computers, um in den Schlafzustand einzutreten;
nach Erfassen der zweiten Anweisung, die durch die Eingabeeinrichtung übertragen und verwendet wird, um den Computer anzuweisen, von dem Schlafzustand in den Wachzustand zu wechseln, Erhalten der gespeicherten Bildinformationen von dem Speicher, und Anzeigen, unter Verwendung eines grafischen Ausgabeprotokolls, GOB, der Bildinformationen auf dem Anzeigebildschirm; und
Starten eines Betriebssystems, um den Computer zu steuern, um von dem Schlafzustand in den Wachzustand zu wechseln, wobei das Starten eines Betriebssystems das Laden eines Vorrichtungstreibers der Eingabeeinrichtung des Computers und das Erkennen, durch den Prozessor, einer Operation, die durch einen Benutzer unter Verwendung der Eingabeeinrichtung an den Bildinformationen durchgeführt wird, die auf dem Anzeigebildschirm angezeigt werden, umfasst.

9. Computer nach Anspruch 8, wobei der Prozessor spezifisch für Folgendes konfiguriert ist:
Starten einer PEI-Stufe eines BIOS, und
nach dem Initialisieren einer Grafikkarte in der PEI-Stufe, Erhalten der Bildinformationen von dem Speicher, der im Voraus beantragt wird.

10. Computer nach Anspruch 8 oder 9, wobei der Prozessor die Bildinformationen auf dem Anzeigebildschirm anzeigt, bevor das Betriebssystem gestartet wird.

11. Computer nach Anspruch 8, wobei der Speicher durch den Prozessor beantragt wird, wenn der Computer gestartet wird.

12. Computer nach Anspruch 8, wobei der Prozessor ferner für Folgendes konfiguriert ist:
Erhalten von Adressinformationen des Speichers; und
beim Speichern, in dem Speicher, der Bildinformationen, die aktuell auf dem Anzeigebildschirm angezeigt werden, der Prozessor spezifisch für Folgendes konfiguriert ist:
Speichern, in dem Speicher basierend auf den Adressinformationen des Speichers, der Bildinformationen, die aktuell auf dem Anzeigebildschirm angezeigt werden.

13. Computer nach Anspruch 8, wobei der Prozessor ferner für Folgendes konfiguriert ist:
wenn ein zweites Statusbit in dem Speicher gespeichert wird und wenn in dem Speicher die Bildinformationen gespeichert werden, die aktuell auf dem Anzeigebildschirm angezeigt werden, Einstellen des zweiten Statusbits auf einen spezifizierten Wert, wobei der spezifizierte Wert angibt, dass die Bildinformationen in dem Speicher gespeichert werden.

14. Computer nach Anspruch 13, wobei vor dem Erhalten der Bildinformationen von dem Speicher der Prozessor ferner für Folgendes konfiguriert ist:
Bestimmen, dass das zweite Statusbit in dem Speicher gespeichert wird und ein Wert des zweiten Statusbits der spezifizierte Wert ist.

15. Computerlesbares Speichermedium, wobei das computerlesbare Speichermedium ein Softwareprogramm speichert, und wenn es durch einen oder mehrere der Prozessoren gelesen und ausgeführt wird, das Softwareprogramm das Verfahren nach einem der Ansprüche 1 bis 7 implementieren kann.

## Revendications

1. Procédé pour réveiller un ordinateur à partir d'un état de sommeil, dans lequel le procédé comprend :
après la détection d'une première instruction utilisée pour ordonner à l'ordinateur d'entrer dans l'état de sommeil, le stockage (201), par une unité centrale de traitement, CPU, dans l'ordinateur dans une mémoire qui est demandée à l'avance, d'informations d'image actuellement affichées sur un écran d'affichage de l'ordinateur, et la commande de l'ordinateur pour entrer dans l'état de sommeil ;
après la détection d'une seconde instruction utilisée pour ordonner à l'ordinateur de passer de l'état de sommeil à un état d'éveil, l'obtention (202), par la CPU, des informations d'image de la mémoire qui est demandée à l'avance, et l'affichage, à l'aide d'un protocole de sortie graphique, GOP, des informations d'image sur l'écran d'affichage ; et
le démarrage (203), par la CPU, d'un système d'exploitation, et la commande de l'ordinateur pour passer de l'état de sommeil à l'état d'éveil, dans lequel le démarrage d'un système d'exploitation comprend le chargement d'un pilote de périphérique d'un appareil d'entrée de l'ordinateur, et la reconnaissance, par la CPU, d'une opération effectuée par un utilisateur à l'aide de l'appareil d'entrée sur les informations d'image affichées sur l'écran d'affichage.

2. Procédé selon la revendication 1, dans lequel l'obtention, par la CPU, des informations d'image à partir de la mémoire qui est demandée à l'avance comprend :
le démarrage, par la CPU, d'une étape PEI d'initialisation d'interface de micrologiciel extensible préconfigurée d'un BIOS de système d'entrée/sortie de base ; et
après l'initialisation d'une carte graphique à l'étape PEI, l'obtention, par la CPU, des informations d'image de la mémoire qui est demandée à l'avance.

3. Procédé selon la revendication 1 ou 2, dans lequel l'affichage, par la CPU, des informations d'image sur l'écran d'affichage est effectué avant le démarrage d'un système d'exploitation.

4. Procédé selon la revendication 1, dans lequel la mémoire qui est demandée à l'avance est demandée par la CPU lorsque l'ordinateur est démarré.

5. Procédé selon la revendication 1, dans lequel avant le stockage, par une CPU dans une mémoire qui est demandée à l'avance, d'informations d'image actuellement affichées sur un écran d'affichage de l'ordinateur, le procédé comprend en outre :
l'obtention d'informations d'adresse de la mémoire qui est demandée à l'avance ; et
le stockage, par une CPU dans une mémoire qui est demandée à l'avance, d'informations d'image actuellement affichées sur un écran d'affichage de l'ordinateur comprend :
le stockage, par la CPU sur la base des informations d'adresse de la mémoire qui est demandée à l'avance et dans la mémoire qui est demandée à l'avance, des informations d'image actuellement affichées sur l'écran d'affichage de l'ordinateur.

6. Procédé selon la revendication 1, dans lequel le procédé comprend en outre :
lorsqu'un second bit d'état est stocké dans la mémoire qui est demandée à l'avance, et lors du stockage, dans la mémoire qui est demandée à l'avance, des informations d'image actuellement affichées sur l'écran d'affichage de l'ordinateur, le réglage, par la CPU, du second bit d'état à une valeur spécifiée, dans lequel la valeur spécifiée indique que les informations d'image sont stockées dans la mémoire.

7. Procédé selon la revendication 6, dans lequel avant l'obtention, par la CPU, des informations d'image de la mémoire qui est demandée à l'avance, le procédé comprend en outre :
la détermination, par la CPU, que le second bit d'état est stocké dans la mémoire qui est demandée à l'avance et qu'une valeur du second bit d'état est la valeur spécifiée.

8. Ordinateur (600), comprenant un dispositif de stockage (601), un appareil d'entrée (602), un écran d'affichage (603), une mémoire (604) et un processeur (605), dans lequel
le dispositif de stockage stocke un programme logiciel ; l'appareil d'entrée est configuré pour recevoir une première instruction utilisée pour ordonner à l'ordinateur d'entrer dans un état de sommeil et une seconde instruction utilisée pour ordonner à l'ordinateur de passer de l'état de sommeil à un état d'éveil, et transmettre la première instruction et la seconde instruction au processeur ;
l'écran d'affichage est configuré pour afficher des informations d'image d'une tâche actuellement traitée par l'ordinateur ;
la mémoire est demandée à l'avance par le processeur et est configurée pour stocker les informations d'image affichées sur l'écran d'affichage ;
le processeur est configuré pour appeler un programme stocké dans le dispositif de stockage, et effectuer les opérations suivantes :
après la détection de la première instruction transmise par l'appareil d'entrée et utilisée pour ordonner à l'ordinateur d'entrer dans l'état de sommeil, le stockage, dans la mémoire, d'informations d'image actuellement affichées sur l'écran d'affichage, et la commande de l'ordinateur pour entrer dans l'état de sommeil ;
après la détection de la seconde instruction transmise par l'appareil d'entrée et utilisée pour ordonner à l'ordinateur de passer de l'état de sommeil à l'état d'éveil, l'obtention des informations d'image stockées à partir de la mémoire, et l'affichage, à l'aide d'un protocole de sortie graphique, GOP, des informations d'image sur l'écran d'affichage ; et
le démarrage d'un système d'exploitation pour commander l'ordinateur afin qu'il passe de l'état de sommeil à l'état d'éveil, dans lequel le démarrage d'un système d'exploitation comprend le chargement d'un pilote de périphérique de l'appareil d'entrée de l'ordinateur, et la reconnaissance, par le processeur, d'une opération effectuée par un utilisateur utilisant l'appareil d'entrée sur les informations d'image affichées sur l'écran d'affichage.

9. Ordinateur selon la revendication 8, dans lequel le processeur est spécifiquement configuré pour :
démarrer une étape PEI d'un BIOS, et
après l'initialisation d'une carte graphique à l'étape PEI, obtenir des informations d'image de la mémoire qui est demandée à l'avance.

10. Ordinateur selon la revendication 8 ou 9, dans lequel le processeur affiche les informations d'image sur l'écran d'affichage avant de démarrer le système d'exploitation.

11. Ordinateur selon la revendication 8, dans lequel la mémoire est demandée par le processeur lorsque l'ordinateur est démarré.

12. Ordinateur selon la revendication 8, dans lequel le processeur est en outre configuré pour :
obtenir des informations d'adresse de la mémoire ; et
lors du stockage, dans la mémoire, des informations d'image actuellement affichées sur l'écran d'affichage, le processeur est spécifiquement configuré pour :
stocker, dans la mémoire sur la base des informations d'adresse de la mémoire, les informations d'image actuellement affichées sur l'écran d'affichage.

13. Ordinateur selon la revendication 8, dans lequel le processeur est en outre configuré pour :
lorsqu'un second bit d'état est stocké dans la mémoire, et lors du stockage, dans la mémoire, des informations d'image actuellement affichées sur l'écran d'affichage, régler le second bit d'état à une valeur spécifiée, dans lequel la valeur spécifiée indique que les informations d'image sont stockées dans la mémoire.

14. Ordinateur selon la revendication 13, dans lequel avant l'obtention des informations d'image de la mémoire, le processeur est en outre configuré pour :
déterminer que le second bit d'état est stocké dans la mémoire et qu'une valeur du second bit d'état est la valeur spécifiée.

15. Support de stockage lisible par ordinateur, dans lequel le support de stockage lisible par ordinateur stocke un programme logiciel, et lorsqu'il est lu et exécuté par un ou plusieurs processeurs, le programme logiciel peut mettre en œuvre le procédé selon l'une quelconque des revendications 1 à 7 .
